# EUROPÄISCHE PATENTANMELDUNG

(11) **EP 3 053 647 A1**
(43) Veröffentlichungstag der Anmeldung: **10.08.2016**
(21) Anmeldenummer: 15154112.5
(22) Anmeldetag: 06.02.2015
(51) Int. Cl.: B01J 19/18, B01J 8/00, C08F 2/00

(54) **Rohrreaktor und Verfahren zur mehrphasigen Polymerisation**

(71) Anmelder: LANXESS International SA, 1763 Granges-Paccot (CH)
(72) Erfinder: Ritter, Joachim, 51381 Leverkusen (DE)
(74) Vertreter: Deblon, Jörg-Stephan

(57) **Zusammenfassung**

Die vorliegende Erfindung betrifft einen Rohrreaktor (14) zur mehrphasigen Polymerisation, insbesondere zur Herstellung von Butylkautschuk, mit einem Rohrstück (16) zur radialen Begrenzung eines Reaktorvolumens zwischen einem Einlass (18) und einem Auslass (20), einem Rührer (22) zur Erzeugung einer Strömung (27) in radialer Richtung des Rohrstücks (16), wobei der Rührer (22) derart dimensioniert und betreibbar ist, dass der Strömung (27) eine Zentrifugalkraft aufprägbar ist, die eine Konzentrationsverteilung in radialer Richtung innerhalb des Rohrstücks (16) erzeugt, und eine Auslassleitung (32) zur Ableitung eines aufkonzentrierten radialinneren Teils (30) der Strömung (27, 28). Durch die Aufkonzentrierung von Polymer-Partikeln im radial inneren Teil (30) der Strömung (27, 28) wird ein Verkleben des Rohrstücks (16) durch die Polymer-Partikel vermieden, so dass das Risiko einer Verstopfung reduziert ist.

## Beschreibung

Die vorliegende Erfindung betrifft einen Rohrreaktor, mit dessen Hilfe eine mehrphasige Polymerisation durchgeführt werden kann, sowie ein Verfahren zur mehrphasigen Polymerisation. Die vorliegende Erfindung betrifft insbesondere einen Rohrreaktor sowie ein Verfahren zur Herstellung von Butylkautschuk durch eine Polymerisation von Monomeren mit Hilfe eines Katalysators in einem flüssigen Lösungsmittel.

Aus EP 1 591 459 A1 ist es bekannt mit Hilfe eines rohrförmigen Kreislaufreaktors ("Loop-Reaktor") eine Polymerisation durchzuführen, um Polyolefine herzustellen. Hierzu wird dem Kreislaufreaktor kontinuierlich eine Suspension entzogen, die in einem Lösungsmittel feste Polymerpartikel enthält. Der entzogene Strom wird einem Hydrozyklon zugeführt, um die Polymerpartikel aufzukonzentrieren und nachfolgend in einer Trenneinrichtung zu trennen und zu reinigen. Das in der Trenneinrichtung abgetrennte Lösungsmittel sowie der lösungsmittelreiche Anteil des Hydrozyklons, der nicht zur Trenneinrichtung geführt wurde, wird dem Kreislaufreaktor wieder zugeführt.

Nachteilig bei einem derartigen Reaktor und einem derartigen Verfahren ist, dass die einzelnen Rohrleitungen und insbesondere der Reaktor leicht verstopfen können. Insbesondere bei der Herstellung von Butylkautschuk ist es typischerweise erforderlich, die Polymerisation bei Temperaturen von -70 bis -100°C durchzuführen. Diese Temperatur liegt nahe genug bei der Glasübergangstemperatur von Butylkautschuk, die bei etwa -75° C bis -67° C liegt. Daher besteht insbesondere bei der Herstellung von Butylkautschuk die Gefahr, dass aufgrund der bei der Polymerisation entstehenden Reaktionswärme die Butylkautschuk-Partikel nicht mehr glasförmig sind und in diesem Zustand sehr leicht an Oberflächen festkleben. Dies führt zu einer Verstopfung der Rohrleitungen und insbesondere eines rohrförmigen Reaktors, so dass es häufig erforderlich ist, die Herstellung von Butylkautschuk zu unterbrechen und die Rohrleitungen sowie den rohrförmigen Reaktor aufwendig zu reinigen.

Es ist die Aufgabe der Erfindung, einen Rohrreaktor sowie ein Verfahren zur mehrphasigen Polymerisation, insbesondere zur Herstellung von Butylkautschuk, bereitzustellen, bei denen die Gefahr einer Verstopfung reduziert ist.

Die Lösung der Aufgabe erfolgt erfindungsgemäß durch einen Rohrreaktor umfassend zumindest ein Rohrstück zur radialen Begrenzung eines Reaktorvolumens zwischen einem Einlass und einem Auslass, einen Rührer zur Erzeugung einer Strömung in axialer Richtung des Rohrstücks, wobei der Rührer vorzugsweise derart dimensioniert und betreibbar ist, dass der Strömung eine Zentrifugalkraft aufprägbar ist, die eine Konzentrationsverteilung in radialer Richtung innerhalb des Rohrstücks erzeugt, und eine Auslassleitung zur Ableitung eines radial inneren Teils der Strömung.

Weiterhin umfasst die Erfindung ein Verfahren zur mehrphasigen Polymerisation, insbesondere zur Herstellung von Butylkautschuk, umfassend zumindest die Schritte:
Mischen eines ersten Edukts mit einem zweiten Edukt und/oder einem Katalysator zur Durchführung einer Polymerisation zu einem Produkt in einem Lösungsmittel mit Hilfe eines Rührers, Aufprägen einer Zentrifugalkraft zumindest auf das Produkt und das Lösungsmittel mit Hilfe des selben Rührers und Entnehmen eines aufkonzentrierten radial inneren Teils der Strömung.

Der erfindungsgemäße Rohrreaktor zur mehrphasigen Polymerisation, der insbesondere zur Herstellung von Butylkautschuk verwendet werden kann, weist ein Rohrstück zur radialen Begrenzung eines Reaktorvolumens zwischen einem Einlass und einem Auslass auf. Der Rohrreaktor weist einen Rührer zur Erzeugung einer Strömung in axialer Richtung des Rohrstücks auf, wobei der Rührer erfindungsgemäß derart dimensioniert und betreibbar ist, dass der Strömung eine Zentrifugalkraft aufprägbar ist, die eine Konzentrationsverteilung in radialer Richtung innerhalb des Rohrstücks erzeugt. Ferner ist eine Auslassleitung zur Ableitung eines aufkonzentrierten radial inneren Teils der Strömung vorgesehen.

Durch den Rührer des Rohrreaktors wird somit nicht nur eine axiale Strömung und eine Vermischung eines ersten Edukts mit einem zweiten Edukt und/oder weiterer Edukte und/oder Katalysator erreicht, sondern zusätzlich eine Zentrifugalkraft aufgeprägt. Insbesondere überwiegt hierbei der Anteil der Zentrifugalkräfte den Anteil der Trägheitskräfte und Gewichtskräfte in axialer Richtung sowie den Anteil der Reibungskräfte. 15 Aufgrund der aufgeprägten Zentrifugalkraft findet innerhalb des Rohrreaktors eine Konzentrationsverteilung statt, so dass bereits innerhalb des Rohrreaktors eine zumindest teilweise Trennung des Produkts von den nicht reagierten Edukten und/oder dem Katalysator stattfindet. Ferner kann das Produkt aufkonzentriert werden, so dass der Anteil am Produkt bezogen auf eine Produkt/Lösungsmittel-Mischung sich erhöht. Besonders bevorzugt weist das Produkt eine geringere Dichte auf als das Lösungsmittel, so dass sich das Produkt im Innern des Rohrreaktors aufkonzentriert. Dadurch wird vermieden, dass das Produkt, beispielsweise Butylkautschuk, mit dem Rohrstück des Rohrreaktors in Berührung kommt, so dass die Innenseite des Rohrreaktors nicht durch Produkt-Partikel verklebt werden kann.

Das Risiko einer Verstopfung des Rohrreaktors wird dadurch reduziert. Ferner ist es nicht erforderlich, den Inhalt des Rohrreaktors zusätzlich einem Hydrozyklon zuzuführen, da die Wirkung eines Hydrozyklons bereits innerhalb des Rohrreaktors erreicht werden kann. Dies kann mit demselben Rührer erreicht werden, der sowieso vorgesehen ist, um eine axiale Förderung und eine Vermischung zu erreichen. Hierbei wird die Erkenntnis ausgenutzt, dass auch bei den Drehzahlen des Rührers, die erforderlich sind, um eine hinreichend große Aufkonzentrierung des Produkts zu erreichen, sich in unmittelbarer Umgebung des Rührers eine hinreichend turbulente Strömung ergibt, die zu einer guten Vermischung der eingesetzten Edukte/Katalysator führt. Insbesondere bei der Herstellung von Butylkautschuk ist die Reaktionsgeschwindigkeit hoch genug, dass die Verweilzeit im turbulenten und gemischten Bereich ausreicht, um einen hohen Umsatz und eine guten Raum/Zeit-Ausbeute zu erreichen. Eine Entmischung und eine Aufkonzentrierung des Produkts findet insbesondere bei der Herstellung von Butylkautschuk erst dann statt, wenn sich die Mischung bereits nahe beim chemischen Gleichgewicht befindet. Die Geometrie des Rohrstücks, sowie des Rührers kann derart gewählt werden, dass mindestens 60 Gewichtsprozent, insbesondere mindestens 80 Gewichtsprozent des theoretisch möglichen Produktgewichtsanteils, der auf der Basis des chemischen Gleichgewichts berechnet wurde, erreicht werden kann.

Vorzugsweise ist durch den Rührer in einem dem Auslass zugeordneten Trennbereich innerhalb des Rohrstücks eine zweiphasige geschichtete Rotationsströmung mit zumindest zwei Schichten unterschiedlicher Konzentration aufprägbar. Der Rührer kann derart dimensioniert und betreibbar sein, dass sich innerhalb des Rohrstücks die geschichtete Rotationsströmung ergeben kann. Beispielsweise kann sich innerhalb des Rohrstücks ein Rankine-Wirbel ergeben. Die Schichten der Rotationsströmung sind insbesondere über eine Phasengrenze voneinander getrennt und können jeweils unterschiedliche Winkelgeschwindigkeiten aufweisen. Dadurch ergeben sich voneinander optisch abgrenzbare Teilvolumina unterschiedlicher Konzentrationen. Die Geometrie der Auslassleitung ist insbesondere an die zu erwartende Geometrie der inneren Schicht der Rotationsströmung angepasst. Die Auslassleitung kann beispielsweise einen Innendurchmesser aufweisen, der dem Außendurchmesser der inneren Schicht entspricht 20 oder einen kleineren Durchmesser aufweisen. Dadurch wird gewährleistet, dass über die Auslassleitung ein Massenstrom mit einer besonders hohen Produkt-Konzentration abgezogen werden kann.

Vorzugsweise ist der Rührer benachbart zum Einlass positioniert. Ferner kann eine erste Zuleitung zur Einleitung eines ersten Edukts und eine zweite Zuleitung zur Einleitung eines zweiten Edukts und/oder Katalysators vorgesehen sein, wobei die erste Zuleitung und die zweite Zuleitung insbesondere benachbart zum Rührer in das Rohrstück münden. Es können auch weitere Zuleitungen für das selbe Edukt und/oder weitere Zuleitungen für zusätzliche Edukte vorgesehen sein. Dadurch kann bereits am Einlass des Rohrstücks die Edukte/Katalysator durch den Rührer miteinander vermischt werden, so dass die gesamte 30 Länge des Rohrreaktors effektiv genutzt werden kann. Eine vorzeitige Polymerisation in den Zuleitungen wird vermieden, so dass zu große Partikelgrößen des Produkts vermieden werden können. Stattdessen lässt sich über die Dimensionierung des Rohrstücks und des Rührers die Verweilzeit der gemischten Edukte/Katalysator einstellen, um eine möglichst schmale Molekulargewichtverteilung erreichen zu können. Dies erleichtert insbesondere nachfolgende Trennoperationen.

Besonders bevorzugt taucht die Auslassleitung innerhalb des Rohrstücks in den aufkonzentrierten radial inneren Teil der Strömung ein. Die Auslassleitung ist beispielsweise als Tauchrohr ausgestaltet, dessen Eingangsöffnung innerhalb des aufkonzentrierten radial inneren Teils der Strömung liegt. Dadurch kann vermieden werden, dass nach dem Auslass des Rohrstücks des Rohrreaktors beispielsweise aufgrund einer Querschnittsveränderung eine Quervermischung des aufkonzentrierten Produkts mit den übrigen Bestandteilen der Strömung stattfindet.

Der Rührer ist vorzugsweise ein axialfördernder Rührer, welcher der Strömung eine Zentrifugalkraft aufprägen kann. Hierzu ist der Rührer beispielsweise derart ausgestaltet, dass er die geförderte Strömung in Rotation versetzten kann. Der Rührer weist beispielsweise einen Propeller, insbesondere genau einen Propeller auf, der vergleichbar zu einer Schiffschraube eine axiale Strömung und gleichzeitig eine rotatorische Strömung erzeugen kann. Über den rotatorischen Anteil der Strömung bringt der Rührer eine hinreichend große Tangentialkraft auf die Strömung auf, dass der Strömung eine Fliehkraft aufgeprägt wird, die im nachfolgenden Bereich des Rohrreaktors zu einer Entmischung der Bestandteile der Strömung führen kann.

Insbesondere ist der Rührer mit einer Welle, insbesondere einer perforierten Hohlwelle, verbunden, wobei vorzugsweise die Welle über eine Wellendurchführung in den Rohrrektor einführbar ist und die Wellendurchführung insbesondere mit Lösungsmittel spülbar ist. Über die Hohlwelle kann ein Edukt und/oder Katalysator dem Rohrreaktor zugeführt werden. Ferner kann über die Hohlwelle ein rückgeführter Anteil der Strömung, beispielsweise ein aufkonzentriertes Lösungsmittel, zurückgeführt werden. Über die Perforation in der Hohlwelle kann die über die Hohlwelle zugeführte Strömung bereits vor Erreichen des Rührers mit einer Strömung außerhalb der Hohlwelle kommunizieren und sich vermischen. Dem Rohrreaktor kann dadurch sowohl von radial innen als auch von radial außen Edukt und/oder Katalysator und/oder Lösungsmittel zugeführt werden. Dadurch, dass bevorzugt Lösungsmittel an der Wellendurchführung der Welle zugeführt wird, werden Ablagerungen vermieden und/oder weggespült.

Besonders bevorzugt ist der Innendurchmesser D des Rohrstücks an den Außendurchmesser d des Rührers angepasst. Ein Spalt zwischen dem Rohrstück und dem Rührer kann dadurch möglichst gering gehalten werden ohne ein Verklemmen des Rührers in dem Rohrstück zu riskieren. Hierzu kann für das Verhältnis des Innendurchmessers D des Rohrstücks zum Außendurchmesser d des Rührers 1,0001 ≤ D/d ≤ 1,300, insbesondere 1,0005 ≤ D/d ≤ 1,100 und vorzugsweise 1,001 ≤ D/d ≤ 1,010 gelten. Beispielsweise beträgt das Verhältnis D/d = 1,005 ± 0,001.

Besonders bevorzugt ist die Auslassleitung in axialer Richtung zum Rohrstück verschiebbar. Dadurch ist es möglich, die Auslassleitung an unterschiedliche Strömungsverhältnisse innerhalb des Rohrstücks anzupassen, beispielsweise wenn der Rührer mit unterschiedlichen Drehzahlen und/oder einem unterschiedlichen Leistungseintrag betrieben werden soll und sich die Aufkonzentrierung des Produkts in axialer Richtung des Rohrstücks verschiebt. Gleichzeitig wird dadurch die Montage des Rohrreaktors sowie die Montage des Rohrreaktors in einem anderen Apparat erleichtert, da die Auslassleitung nicht mit dem Rohrstück bei der Montage kollidieren kann. Weiterhin sind dadurch unterschiedliche Produkttypen fahrbar.

Die Erfindung betrifft ferner einen Wärmetauscher, der einen Rohrreaktor aufweist, der wie vorstehend beschrieben aus- und weitergebildet sein kann. Der Rohrreaktor ist im Wesentlichen konzentrisch innerhalb des Wärmetauschers angeordnet, wobei der Wärmetauscher radial außerhalb des Rohrreaktors mindestens ein Wärmetauscherelement zum Wärmeentzug aufweist. Durch den Rührer des Rohrreaktors ist innerhalb des Wärmetauschers eine Schlaufenströmung aufprägbar. Mit nur einem Rührer ist es dadurch möglich die Edukte/Katalysator zu mischen, das Produkt aufzukonzentrieren und innerhalb des Wärmetauschers eine Schlaufenströmung bereitzustellen. Durch die Schlaufenströmung kann beispielsweise das nicht über die Auslassleitung ausgetragene Lösungsmittel an die Wärmetauscherelemente gefördert werden, um das Lösungsmittel zu kühlen. Da bereits ein Großteil des aufkonzentrierten Produkts über die Auslassleitung entfernt wurde, enthält die zu den Wärmetauschelementen geförderte Strömung kaum Polymer-Partikel, welche die Wärmtauscherelemente verkleben könnten. Dadurch wird eine Verschlechterung des Wärmeübergangs bei den Wärmetauscherelementen vermieden. Ein Austausch der Wärmetauscherelemente und/oder einer Reinigung der Wärmetauscherelemente kann dadurch entfallen oder zumindest in deutlich größeren Zeitabständen erfolgen. Dadurch wird die Produktivität weiter erhöht. Ferner wird ein Verstopfen der Durchgänge zwischen verschiedenen Wärmetauscherelementen vermieden. Durch die bevorzugte Abtrennung größerer Partikel wird ein Verstopfen der Wärmetauscherelemente vermieden.

In einer bevorzugten Ausführungsform weist die Auslassleitung eine Kühleinrichtung zur Kühlung der Auslassleitung auf.

Die Kühleinrichtung weist insbesondere ein vorzugsweise doppelwandiges Mantelrohr zur Durchleitung eines Kühlmediums auf. Beispielsweise kann ein Kühlmedium im Gegenstrom an der Auslassleitung entlang strömen, an der Eingangsöffnung der Auslassleitung nach außen umgelenkt werden und im Gleichstrom zurückströmen. Durch die gekühlte Auslassleitung kann verhindert werden, dass sich das Produkt erwärmt. Insbesondere bei der Herstellung von Butylkautschuk wird dadurch vermieden, dass der über die Auslassleitung aufkonzentrierte Butylkautschuk nicht mehr glasartig bleibt und die Auslassleitung verklebt. Dadurch wird eine Verstopfung der Auslassleitung vermieden.

Die Erfindung betrifft ferner eine Anlage zur mehrphasigen Polymerisation, die insbesondere zur Herstellung von Butylkautschuk verwendet werden kann. Die Anlage weist einen Wärmetauscher zur Kühlung eines Fluids auf. Die Anlage weist ferner eine Trenneinrichtung zur Abtrennung eines Produkts auf. Mit einem Ausgang der Trenneinrichtung und dem Wärmetauscher ist eine Recyclingleitung verbunden. Der Wärmetauscher und/oder die Recyclingleitung weist einen Rohrreaktor auf, der wie vorstehend beschrieben aus- und weitergebildet sein kann. Die Auslassleitung des Rohrreaktors ist mit einem Eingang der Trenneinrichtung verbunden. Der Wärmetauscher kann insbesondere wie vorstehend beschrieben aus- und weitergebildet sein. Durch den Rohrreaktor wird vermieden, dass Polymer-Partikel an der Recyclingleitung und/oder an Elementen des Wärmetauschers festkleben und diese verstopfen. Das Risiko einer Verstopfung ist dadurch reduziert, so dass die Anlage produktiver betrieben werden kann. Insbesondere ist es möglich, die Anlage über einen längeren Zeitraum kontinuierlich zu betreiben, ohne Reinigungsarbeiten durchführen zu müssen. Ferner ist es möglich mehr als einen Wärmetauscher vorzusehen, die in Reihe und/oder parallel geschaltet sind, um beispielsweise den zu kühlenden Massenstrom auf mehrere kleiner dimensionierte Wärmetauscher aufzuteilen und/oder eine mehrstufige Kühlung durchzuführen, um eine besonders große Temperaturdifferenz bei der Kühlung zu erreichen. Ferner ist es möglich mehrere parallel und/oder in Reihe geschaltete Trenneinrichtungen vorzusehen, um den Produktmassenstrom auf mehrere kleiner dimensionierte Trenneinrichtungen aufzuteilen und/oder eine mehrstufige Trennung mit einem besonders hohen Reinheitsgrad durchzuführen. Die Trenneinrichtung kann insbesondere eine Flash-Einheit, einen Stripper und/oder eine Destillationskolone aufweisen. Ferner kann eine Purge-Leitung vorgesehen sein, die insbesondere mit dem Wärmetauscher verbunden ist, um die Aufkonzentration unerwünschter Verunreinigungen im Lösungsmittel zu vermeiden.

Die Erfindung betrifft ferner ein Verfahren zur mehrphasigen Polymerisation, insbesondere zur Herstellung von Butylkautschuk mit den Schritten Mischen eines ersten Edukts mit einem zweiten Edukt und/oder einem Katalysator zur Durchführung einer Polymerisation zu einem Produkt in einem Lösungsmittel mit Hilfe eines Rührers, Aufprägen einer Zentrifugalkraft zumindest auf das Produkt und das Lösungsmittel mit Hilfe des selben Rührers und Entnehmen eines aufkonzentrierten radial inneren Teils der Strömung. Dadurch, dass der Rührer nicht nur zum Mischen sondern auch zum Aufprägen einer Zentrifugalkraft verwendet wird, ergibt sich ein aufkonzentrierter radial innerer Teil der Strömung, aus dem das aufkonzentrierte Produkt entnommen werden kann. Da das Produkt insbesondere eine geringere Dichte als das Lösungsmittel aufweist, können sich die bei der Polymerisation entstehenden Polymer-Partikel im Innern der Strömung aufkonzentrieren, so dass sie nicht an Bauteilen, welche die Strömung radial begrenzen festkleben können. Dadurch wird das Risiko einer Verstopfung insbesondere rohrförmiger Bauteile reduziert. Das Verfahren kann dadurch über einen längeren Zeitraum kontinuierlich betrieben werden, ohne dass Reinigungs- und Wartungsarbeiten erforderlich sind. Dies führt zu einer höheren Produktivität des Verfahrens.

Vorzugsweise wird beim Aufprägen der Zentrifugalkraft eine Rotationsströmung erzeugt, wobei die Rotationsströmung insbesondere eine zweiphasige geschichtete Rotationsströmung mit zumindest zwei Schichten unterschiedlicher Konzentration ist. Durch die Rotationsströmung kann die Aufkonzentrierung des Produkts erleichtert werden, wodurch es insbesondere möglich ist zwei über eine Phasengrenze voneinander getrennte Schichten innerhalb der Strömung zu erzeugen. Dies erleichtert es das aufkonzentrierte Produkt zu entnehmen.

Insbesondere wird zumindest das Lösungsmittel gekühlt. Das Lösungsmittel wird vorzugsweise nach dem Aufprägen der Zentrifugalkraft und besonders bevorzugt nach dem Entnehmen des aufkonzentrierten radial inneren Teils der Strömung gekühlt. Dadurch ist es möglich, möglichst wenige bei der Polymerisation entstandene Polymer-Partikel zu kühlen. Da der Wärmeübergang zum Lösungsmittel besser als der Wärmeübergang zu den Polymer-Partikeln ist, kann dadurch eine effizientere Kühlung erreicht werden. Ferner kann das rückgeführte gekühlte Lösungsmittel die bei der Polymerisation entstehenden Polymer-Partikel vollständig umfließen, so dass es besonders einfach und effizient ist die bei der Polymerisation entstehende Reaktionswärme von den entstandenen Polymer-Partikel abzuführen. Besonders bevorzugt wird das Lösungsmittel über eine Schlaufenströmung zu mindestens einem Wärmetauscherelement zum Wärmeentzug gefördert, wobei die

Schlaufenströmung vorzugsweise mit Hilfe des selben Rührers aufgeprägt wird. Dadurch ist nur ein Rührer erforderlich, um die für die Kühlung des Lösungsmittels erforderliche Schlaufenströmung bereitzustellen. Ein zusätzliches Fördermittel ist nicht erforderlich. Besonders bevorzugt wird der Rührer derart betrieben, dass für das Verhältnis c = wₜₐₙ ² /((d/2) • g) mit einer Tangentialgeschwindigkeit wₜₐₙ am äußeren Rand des Rührers, einem Außendurchmesser d des Rührers und der Erdbeschleunigung g c ≥ 10, insbesondere c ≥ 100 und vorzugsweise c ≥ 1000 gilt. Vorzugsweise gilt c ≤ 10000. Bei dieser Betriebsweise des Rührers kann sichergestellt werden, dass nicht nur eine Mischung durch den Rührer erreicht wird sondern auch eine Aufkonzentrierung in einem radial inneren Teil der durch den Rührer aufgeprägten Strömung.

Besonders bevorzugt wird bei dem Verfahren ein Rohrreaktor verwendet, der wie vorstehend beschrieben aus- und weitergebildet sein kann. Zusätzlich oder alternativ kann bei dem Verfahren ein Wärmetauscher verwendet werden, der wie vorstehend beschrieben aus- und weitergebildet sein kann. Zusätzlich oder alternativ kann bei dem Verfahren eine Anlage verwendet werden, die wie vorstehend beschrieben aus- und weitergebildet sein kann. Durch den hierbei verwendeten Rohrreaktor, der insbesondere innerhalb des Wärmetauschers angeordnet ist, kann mit Hilfe des entsprechend betriebenen Rührers eine geeignete Strömung innerhalb des Rohrstücks des Rohrreaktors erzwungen werden, die nach der Polymerisation automatische zu einer Aufkonzentrierung des entstandenen Produkts führt.

Nachfolgend wird die Erfindung unter Bezugnahme auf die anliegenden Zeichnungen anhand bevorzugter Ausführungsbeispiele exemplarisch erläutert.

Es zeigen:
- Fig. 1:: eine schematische Seitenansicht eines Wärmetauschers mit einem erfindungsgemäßen Rohrreaktor,
- Fig. 2:: eine schematische Seitenansicht eines erfindungsgemäßen Rohrreaktors in einer weiteren Ausführungsform und
- Fig. 3:: eine schematische Seitenansicht einer Anlage zur mehrphasigen Polymerisation mit dem Wärmetauscher aus Fig. 1.

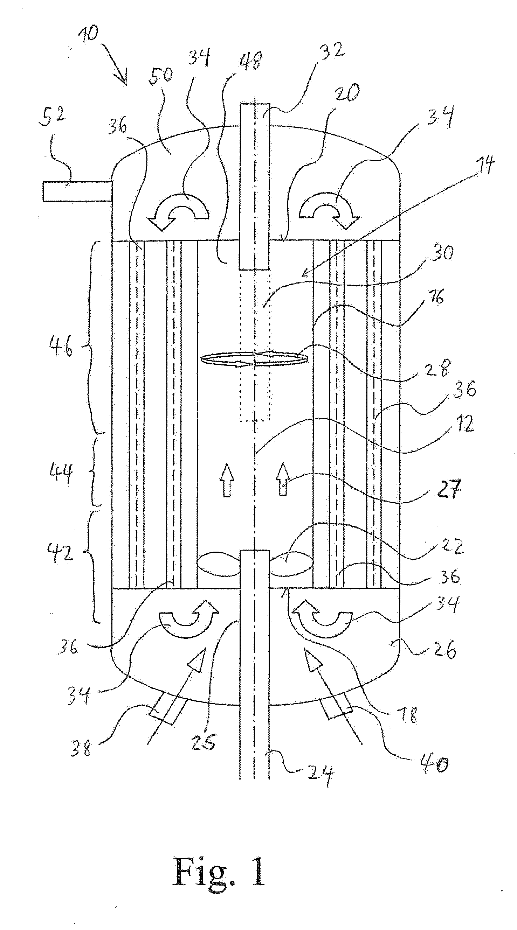

Der in Fig. 1 dargestellte Wärmetauscher 10 weist ein konzentrisch zu einer Mittelachse 12 angeordneten Rohrreaktor 14 auf. Der Rohrreaktor 14 weist ein Rohrstück 16 auf, dass von einem Einlass 18 bis zu einem Auslass 20 führt. Der Rohrreaktor 14 weist einen Rührer 22 auf, bei dem es sich im dargestellten Ausführungsbeispiel um einen Propeller handelt. Der Rührer 22 wird von einer Welle 24 angetrieben, die aus einem Boden 26 des Wärmetauschers 10 nach unten herausragt. Die Welle 24 wird über eine Wellendurchführung 25 in den Wärmetauscher 10 eingeführt, wobei über die Wellendurchführung 25 insbesondere Lösungsmittel zugeführt wird, um Ablagerungen zu vermeiden und wegzuspülen. Über die Welle 24 wird der Rührer 22 mit einer Drehzahl beaufschlagt, die ausreicht nicht nur eine Axialströmung 27 sondern auch eine Rotationsströmung 28 zu erzeugen. Über die Rotationsströmung 28 wird der Axialströmung 27 eine Zentrifugalkraft aufgeprägt, aufgrund dessen sich eine Konzentrationsverteilung in radialer Richtung innerhalb des Rohrstücks 16 ergibt. Diese Konzentrationsverteilung führt im oberen Bereich des Rohrreaktors 14, das heißt benachbart zum Auslass 20, zu einer geschichteten Rotationsströmung 28, die einen inneren Teil 30 aufweist, in dem sich das Produkt, insbesondere Butylkautschuk, aufkonzentriert hat. Über eine Auslassleitung 32, die den inneren Teil 30 eintaucht, kann das aufkonzentrierte Produkt entnommen werden.

Der Anteil der Axialströmung 27, der nicht über die Auslassleitung 32 entnommen wird, strömt an der Auslassleitung 32 vorbei und wird entlang einer Schlaufenströmung 34 umgelenkt. Die umgelenkte Schlaufenströmung 34, die insbesondere reich an Lösungsmittel und Katalysator ist, strömt an Wärmetauscherelementen 36 vorbei, welche die Schlaufenströmung 34 kühlen.

Im Boden 26 wird ferner über eine erste Zuleitung 38 ein erstes Edukt, beispielsweise 20 Monomer, zugeführt. Über eine zweite Zuleitung 40 wird eine zweites Edukt und/oder Katalysator zugeführt. Die Edukte und/oder der Katalysator werden insbesondere in einem flüssigen Lösungsmittel gelöst. Durch den Rührer 22 werden die über die erste Zuleitung 38 und die zweite Zuleitung 40 zugeführten Edukte/Katalysator in einer Mischzone 42 gemischt, so dass sie in der Mischzone 42 miteinander reagieren können. Danach strömt die Mischung aus Produkt, Edukten und/oder Katalysator in eine Zwischenzone 44, in der die Mischung weiter reagieren kann, aber sich bereits eine Entmischung mit einem Konzentrationsverlauf in radialer Richtung einstellt. In einer Wirbelzone 46 stellt sich eine Rotationsströmung ein, die insbesondere eine innere Schicht mit dem inneren aufkonzentrierten Teil 30 und einem lösungsmittelreichen Teil 48 aufweist.

Der Strömung 27 kann über eine weitere nicht dargestellte Zuleitung ein Recyclingstrom zugeführt werden, der bei einer Reinigung des über die Auslassleitung 32 entfernten aufkonzentrierten Produkts abgetrennt wurde. Der Recyclingstrom kann ferner über die erste Zuleitung 38 und/oder die zweite Zuleitung 40 zugeführt werden. Ferner ist es möglich die Welle 24 als Hohlwelle auszuführen und den Recyclingstrom und/oder Edukt und/oder Katalysator über die als Hohlwelle ausgestaltete Welle 24 zuzuführen. Bevorzugt wird Lösungsmittel an der Wellendurchführung 25 der Welle 24 zugeführt, um Ablagerungen zu vermeiden und/oder wegzuspülen.

Der Wärmetauscher 10 weist ferner einen Kopf 50 auf, mit dem eine Purge-Leitung 52 verbunden ist. Über die Purge-Leitung 52 kann eine lösungsmittelreiche Strömung abgeführt werden, um eine Aufkonzentrierung des Inhalts des Wärmetauschers 10 sowie des Rohrreaktors 14 mit unerwünschten Verunreinigungen oder Nebenprodukten zu vermeiden.

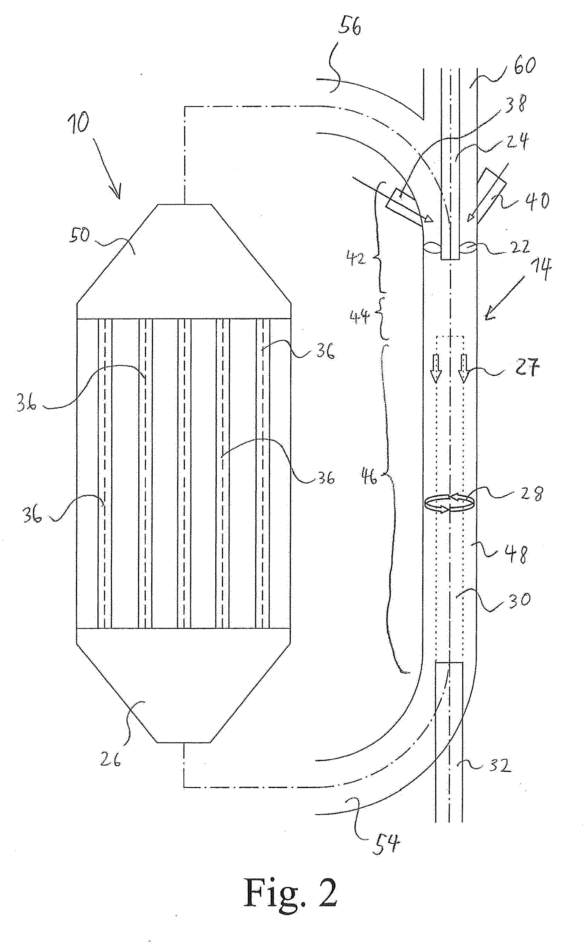

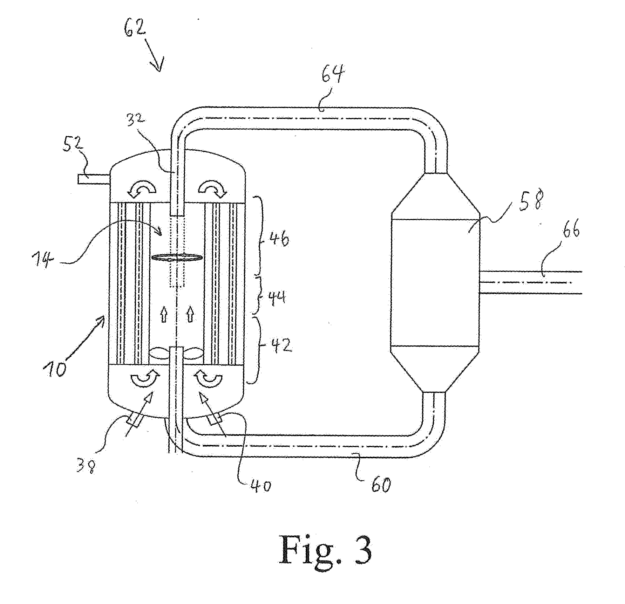

Bei der in Fig. 2 dargestellten Ausführungsform ist der Rohrreaktor 14 im Vergleich zu der in Fig. 1 dargestellten Ausführungsform außerhalb des Wärmetauschers 10 angeordnet. Die an der Auslassleitung 32 vorbeigeführte Strömung wird hierbei über eine Zuleitung 54 dem Wärmetauscher 10 zugeführt, wo die Strömung über Wärmetauscherelemente 36 gekühlt wird. Der Wärmetauscher 10 kann in diesem Fall insbesondere linear durchströmt werden und über eine Rückleitung 56 wieder dem Rohrreaktor 14 zugeführt werden, um die entstehende Reaktionswärme aufzunehmen. Ebenfalls kann in einer Trenneinrichtung 58 (Fig. 3) aus dem über die Auslassleitung 32 entnommenen Produktstrom abgetrenntes Lösungsmittel über eine Recyclingleitung 60 dem Rohrreaktor 14 wieder zugeführt werden. Bei dem in Fig. 2 dargestellten Ausführungsbeispiel ist der Rohrreaktor 14 in der Recyclingleitung 60 angeordnet, wobei ein Teil der Recyclingleitung 60 das Rohrstück 16 des Rohrreaktors 14 ausbildet.

Bei der in Fig. 3 dargestellten Anlage 62 ist der in Fig. 1 dargestellte Wärmetauscher 10, der einen Rohrreaktor 14 aufweist, mit einer Trenneinrichtung 58 verbunden. Alternativ kann der Wärmetauscher 10 durch die in Fig. 2 dargestellte Anordnung ausgetauscht werden. Die Auslassleitung 32 des Rohrreaktors 14 ist über eine Abtrennleitung 64 mit der Trenneinrichtung 58 verbunden. In der Trenneinrichtung 58 wird das über die Abtrennleitung 64 zugeführte Produkt beispielsweise mit Hilfe einer Destillation gereinigt und in mindestens zwei Teilströme aufgeteilt. Das gereinigte Produkt verlässt die Trenneinrichtung 58 über eine Produktleitung 66, um das Produkt zu lagern und/oder weiter zu veredeln und/oder zu verpacken. Die abgetrennten Bestandteile, die insbesondere reich an Lösungsmittel sind und Katalysator und/oder nicht reagierte Edukte aufweisen können, werden über die Recyclingleitung 60 über den Wärmetauscher 10 dem Rohrreaktor 14 zugeführt.

## Patentansprüche

1. Rohrreaktor zur mehrphasigen Polymerisation, insbesondere zur Herstellung von Butylkautschuk umfassend zumindest
ein Rohrstück (16) zur radialen Begrenzung eines Reaktorvolumens zwischen einem Einlass (18) und einem Auslass (20),
ein Rührer (22) zur Erzeugung einer Strömung (27) in axialer Richtung des Rohrstücks (16), wobei der Rührer (22) vorzugsweise derart dimensioniert und betreibbar ist, dass der Strömung (27) eine Zentrifugalkraft aufprägbar ist, die eine Konzentrationsverteilung in radialer Richtung innerhalb des Rohrstücks (16) erzeugt, und
eine Auslassleitung (32) zur Ableitung eines radial inneren Teils (30) der Strömung (27, 28).

2. Rohrreaktor nach Anspruch 1, **dadurch gekennzeichnet, dass** durch den Rührer (22) in einem dem Auslass (20) zugeordnetem Trennbereich (46) innerhalb des Rohrstücks (16) eine zweiphasige geschichtete Rotationsströmung (28) mit zumindest zwei Schichten (30, 48) unterschiedlicher Konzentration aufprägbar ist.

3. Rohrreaktor nach Anspruch 1 oder 2, **dadurch gekennzeichnet, dass** der Rührer (22) benachbart zum Einlass (18) positioniert ist und eine erste Zuleitung (38) zur Einleitung eines ersten Edukts und eine zweite Zuleitung (40) zur Einleitung eines zweiten Edukts und/oder Katalysators vorgesehen ist, wobei die erste Zuleitung (38) und die zweite Zuleitung (40) insbesondere benachbart zum Rührer (22) in das Rohrstück (16) münden.

4. Rohrreaktor nach einem der Ansprüche 1 bis 3, **dadurch gekennzeichnet, dass** die Auslassleitung (32) innerhalb des Rohrstücks (16) in den aufkonzentrierten radial inneren Teils (30) der Strömung (27, 28) eintaucht.

5. Rohrreaktor nach einem der Ansprüche 1 bis 4, **dadurch gekennzeichnet, dass** der Rührer (22) mit einer Welle (24), insbesondere einer perforierten Hohlwelle (24), verbunden ist, wobei vorzugsweise die Welle (24) über eine Wellendurchführung (25) in den Rohrrektor (10) einführbar ist und die Wellendurchführung (25) insbesondere mit Lösungsmittel spülbar ist.

6. Rohrreaktor nach einem der Ansprüche 1 bis 5, **dadurch gekennzeichnet, dass** für das Verhältnis des Innendurchmessers D des Rohrstücks (16) zum Außendurchmesser d des Rührers (22) 1,0001 ≤ D/d ≤ 1,300, insbesondere 1,0005 ≤ D/d ≤ 1,100 und vorzugsweise 1,001 ≤ D/d ≤ 1,010 gilt.

7. Rohrreaktor nach einem der Ansprüche 1 bis 6, **dadurch gekennzeichnet, dass** die Auslassleitung (32) eine Kühleinrichtung zur Kühlung der Auslassleitung (32) aufweist, wobei die Kühleinrichtung insbesondere ein vorzugsweise doppelwandiges Mantelrohr zur Durchleitung eines Kühlmediums aufweist.

8. Rohrreaktor nach einem der Ansprüche 1 bis 7, **dadurch gekennzeichnet, dass** die Auslassleitung (32) in axialer Richtung zum Rohrstück (16) verschiebbar ist.

9. Wärmetauscher mit einem Rohrreaktor (14) nach einem der Ansprüche 1 bis 8, wobei der Rohrreaktor (14) im Wesentlichen konzentrisch innerhalb des Wärmetauschers (10) angeordnet ist und der Wärmetauscher (10) radial außerhalb des Rohrreaktors (14) mindestens ein Wärmetauscherelement (36) zum Wärmeentzug aufweist, wobei durch den Rührer (22) des Rohrreaktors (14) eine Schlaufenströmung (34) innerhalb des Wärmetauschers (10) aufprägbar ist.

10. Anlage zur mehrphasigen Polymerisation, insbesondere zur Herstellung von Butylkautschuk, umfassenfd zumindest
• einen Wärmetauscher (10) zur Kühlung eines Fluids,
• eine Trenneinrichtung (58) zur Abtrennung eines Produkts und
• eine mit einem Ausgang der Trenneinrichtung (58) und dem Wärmetauscher (10) verbundenen Recyclingleitung (60)
wobei der Wärmetauscher (10) und/oder die Recyclingleitung (60) einen Rohrreaktor (14) nach einem der Ansprüche 1 bis 8 aufweist und die Auslassleitung (32) des Rohrreaktors (14) mit einem Eingang der Trenneinrichtung (58) verbunden ist.

11. Verfahren zur mehrphasigen Polymerisation, insbesondere zur Herstellung von Butylkautschuk, mit den Schritten:
• Mischen eines ersten Edukts mit einem zweiten Edukt und/oder einem Katalysator zur Durchführung einer Polymerisation zu einem Produkt in einem Lösungsmittel mit Hilfe eines Rührers (22),
• Aufprägen einer Zentrifugalkraft zumindest auf das Produkt und das Lösungsmittel mit Hilfe des selben Rührers (22) und
• Entnehmen eines aufkonzentrierten radial inneren Teils (30) der Strömung (27, 28).

12. Verfahren nach Anspruch 11, **dadurch gekennzeichnet, dass** beim Aufprägen der Zentrifugalkraft eine Rotationsströmung (28) erzeugt wird, wobei die Rotationsströmung (28) insbesondere eine zweiphasige geschichtete Rotationsströmung (28) mit zumindest zwei Schichten (30, 48) unterschiedlicher Konzentration ist.

13. Verfahren nach Anspruch 11 oder 12, **dadurch gekennzeichnet, dass** zumindest das Lösungsmittel gekühlt wird, wobei zumindest das Lösungsmittel nach dem Aufprägen der Zentrifugalkraft und insbesondere nach dem Entnehmen des aufkonzentrierten radial inneren Teils (30) der Strömung (27, 28) über eine 10 Schlaufenströmung (34) zu mindestens einem Wärmetauscherelement (36) zum Wärmeentzug gefördert wird, wobei die Schlaufenströmung (34) mit Hilfe des selben Rührers (22) aufgeprägt wird.

14. Verfahren nach einem der Ansprüche 11 bis 13, **dadurch gekennzeichnet, dass** der Rührer (22) derart betrieben wird, dass für das Verhältnis c = wₜₐₙ ² /((d/2) • g) mit einer Tangentialgeschwingigkeit wₜₐₙ am äußeren Rand des Rührers (22), einem Außendurchmesser d des Rührers (22) und der Erdbeschleunigung g c ≥ 10, insbesondere c ≥ 100 und vorzugsweise c ≥ 1000 gilt.

15. Verfahren nach einem der Ansprüche 11 bis 14, **dadurch gekennzeichnet, dass** ein Rohrreaktor (14) nach einem der Ansprüche 1 bis 8 und/oder ein Wärmetauscher (10) nach Anspruch 9 und/oder eine Anlage (62) nach Anspruch 10 verwendet wird.
